# EUROPEAN PATENT SPECIFICATION

(11) **EP 3 369 310 B1**
(45) Date of publication and mention of the grant of the patent: **24.11.2021**
(21) Application number: 15907316.2
(22) Date of filing: 30.10.2015
(51) Int. Cl.: A01G 9/04, A01G 31/02

(54) **HYDOPONIC SYSTEM**
HYDOPONISCHES SYSTEM
SYSTÈME HYDOPONIQUE

(43) Date of publication of application: 05.09.2018
(73) Proprietor: Glycyr Co., Ltd., Chiba 270-0035 (JP)
(72) Inventor: WU, De, Matsudo-shi, Chiba 270-0035 (JP); LI, Zainan, TongZhou District Beijing 101101 (CN)
(74) Representative: D Young & Co LLP
(86) International application number: PCT/JP2015/080730
(87) International publication number: WO 2017/072952

(56) References cited:
- CN-U- 204 540 246
- JP-A- H 089 806
- JP-A- H0 430 731
- JP-A- H05 137 472
- JP-A- H08 214 722
- JP-A- 2004 041 110
- JP-A- 2004 041 110
- JP-A- 2006 158 384
- JP-A- 2013 201 983
- None

## Description

### Technical Field

The present invention relates to a cultivation bed for use in hydroponic of fruit vegetables and a hydroponic system including the cultivation bed.

### Background Art

The mainstream method cultivating of fruit vegetables in greenhouse culture is through soil culture or drip fertigation. Such farming method often causes replant failure and requires significant labor work such as soil preparation. In addition, the crop yield depends on weather, and is highly vulnerable to possible outbreak of diseases. Close attention is also required to harvest nutritionally stable crops. Meanwhile, it has been pointed out that the excessive use of fertilizers causes environmental problems.

In recent years, there has been a trend to develop a plant factories, which are systems for hydroponic culture under controlled light, water, and temperature in a closed environment or semi-closed environment. For example, Patent Literature 1 proposes a cucumber cultivation bed and a cucumber culture method. Patent Literature 2 relates to a solution culture system for managing culture nutrients and water retention. Patent Literature 3 relates to a transportable cultivation bed for hydroponics. Patent Literature 4 relates to a device for nutritive solution culture for regulating the frequency and uniformity of supplying the nutritive solution. Patent Literature 5 relate to a low cost method for plant cultivation.

### Citation List

### Patent Literature

Patent Literature 1: JP Patent Publication (Kokai) No. 2006-136311 A
Patent Literature 2: JP H08 9806 A
Patent Literature 3: JP 2004 041110 A
Patent Literature 4: JP H04 30731 A
Patent Literature 5: CN 204 540 246 U and US 2017/258010 A

### Summary of Invention

The present invention is defined by the appended claims and provides a cultivation bed (19) for use in a hydroponic system for fruit vegetables, which includes: a cultivation bed body (1) having an incline in the longitudinal direction thereof; a water-retaining sheet (2) that covers the inner surface of the cultivation bed; a holding portion (4) for holding a seedling (11) of a fruit vegetable; a drainage groove (5), and a space for accommodating grown roots along both sides of drainage groove (5), characterised in that the cultivation bed further provides a water-permeable root barrier sheet (3) that is laid over the water-retaining sheet (2); and a nutrient solution flowing groove (8) in either edge portion.

The present invention provides a hydroponic system, which is configured such that the hydroponic system includes the cultivation bed (19) according to any one of claims 1 to 7 and a nutrient solution tank (20) and that a nutrient solution circulates through the nutrient solution tank (20) and the cultivation bed (19), wherein the nutrient solution tank (20) is equipped with a system control unit (21).

The present invention provides a method for culturing a fruit vegetable, which comprises using the cultivation bed (19) according to any one of claims 1 to 7 or the hydroponic system according to claim 8 or 9.

### Technical Problem

It is very costly to maintain a plant factory and it is very difficult to establish a practical system. Further, there is no known example of successes in increasing the actual production of fruit vegetables such as cucumbers. For example, previously reported yields of cucumbers are at most 20 tons per 1000 m². This is not highly effective as compared with the yields in open-field culture and not practical given the cost.

### Solution to Problem

In view of the above-mentioned problems, the present inventors studied various viewpoints in order to establish, a highly energy-saving system, hydroponic system capable of improving productivity and realizing high profits. This new method thereby succeeds in establishing a system that allows a high yield at remarkably low cost by improving the cultivation bed structure, system control, and the like.

The following [1] to [10] are described herein.
[1] A cultivation bed (19) for use in a hydroponic system for fruit vegetables, which includes: a cultivation bed body (1) having an incline in the longitudinal direction thereof; a water-retaining sheet (2) that covers the inner surface of the cultivation bed; a water-permeable root barrier sheet (3) that is laid over the water-retaining sheet (2); a holding portion (4) for holding a seedling (11) of a fruit vegetable; and a drainage groove (5).
[2] The cultivation bed (19) according to [1], wherein the incline has a 0.5% to 1% gradient.
[3] The cultivation bed (19) according to [1] or [2], which further includes a water-absorbing mat (7) for facilitating hydration of the seedling (11) in the early stage of settled planting.
[4] The cultivation bed (19) according to any one of [1] to [3], wherein the holding portion (4) for holding the seedling (11) of a fruit vegetable is positioned at an approximate center of the cultivation bed (19) in the lateral direction thereof, and wherein the cultivation bed body (1) has a second incline that descends toward the center from both sides along the lateral direction.
[5] The cultivation bed (19) according to any one of [1] to [4], which includes an irrigation tube (14) with holes formed thereon at 5- to 10-cm intervals.
[6] The cultivation bed (19) according to any one of [1] to [5], wherein the height of a settled planting panel placement portion (16) is not less than 1.5 times the thickness of the settled planting panel (13).
[7] The cultivation bed (19) according to any one of [1] to [6], which has ribs (9) for making a surface with uneven second incline.
[8] A hydroponic system, which is configured such that the hydroponic system includes the cultivation bed (19) according to any one of [1] to [7] and a nutrient solution tank (20) and that a nutrient solution circulates through the nutrient solution tank (20) and the cultivation bed (19), wherein the nutrient solution tank (20) is equipped with a system control unit (21).
[9] The system according to [8], wherein the system control unit (21) includes: means for controlling electric conductivity (EC) of a nutrient solution (22); means for controlling nitrate nitrogen in a nutrient solution (23); means for controlling pH in a nutrient solution (24); means for controlling the dissolved oxygen concentration in a nutrient solution (25); means for controlling the temperature of a nutrient solution (26); and a sterilization means (27).
[10] A method for culturing a fruit vegetable, which comprises using the cultivation bed according to any one of [1] to [7] or the hydroponic system according to [8] or [9].
[11] The method according to [10], wherein the fruit vegetable is a cucurbitaceous or solanaceous plant.
[12] The method according to [10] or [11], which comprises supplying a photosynthetic bacterium and a mycorrhizal fungus into the nutrient solution.

### Advantageous Effects of Invention

According to the method of the present invention, it is possible to conduct efficient culture with a small volume of water, therefore reducing the cost and labor. Further, it is possible to stabilize the productivity of fruit vegetables and bring about high profits.

### Brief Description of Drawings

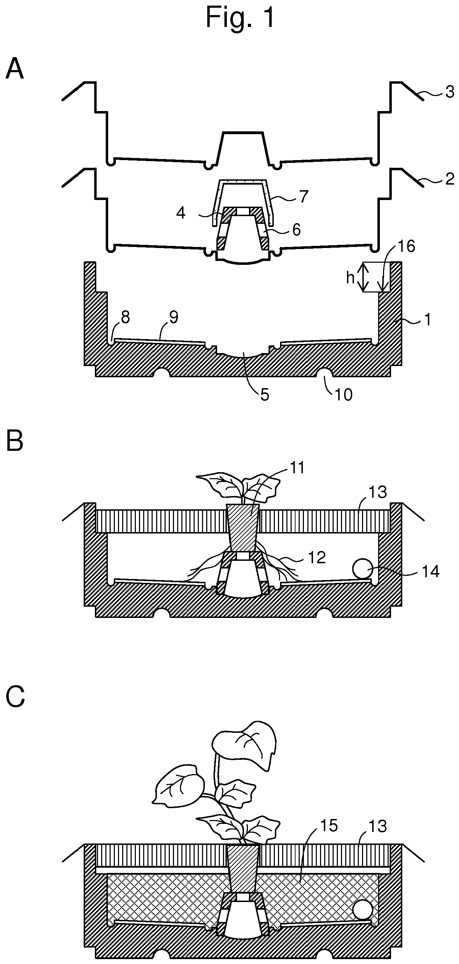

[Figure 1] Figure 1 is a schematic cross-sectional view of a cultivation bed according to the present invention. Figure 1A illustrates a positional relationship of a cultivation bed body (1), a water-retaining sheet (2), a water-permeable root barrier sheet (3), a holding portion (4), and a water-absorbing mat (7). Figure 1B illustrates the state of a fruit vegetable in the early growing stage. Figure 1C illustrates the state of a fruit vegetable in the medium growing stage or later. Note that the water-retaining sheet (2), water-permeable root barrier sheet (3), and water-absorbing mat (7) illustrated in Figure 1A are omitted in Figures 1B and 1C for drawing simplification.
[Figure 2] Figure 2 is a schematic example of the configuration of the cultivation bed (19) of the present invention in which a cultivation bed body (1) is disposed on a substrate (18).
[Figure 3] Figure 3 illustrates an example of a rib (9) in the cultivation bed of the present invention.
[Figure 4] Figure 4 schematically illustrates the system of the present invention. The direction of the flow of a nutrient solution that circulates through a cultivation bed (19) and a nutrient solution tank (20) is indicated by arrows.
[Figure 5] Figure 5 schematically illustrates a system control unit (21) in the system of the present invention. The influx and outflux of a nutrient solution into and from a nutrient solution tank (20) assisted by a pump (P) is indicated by arrows.

### Description of Embodiments

According to the present invention, a cultivation bed for use in a hydroponic system for fruit vegetables is provided.

The term "fruit vegetables" used herein refers to vegetables (including fruits) that bear edible fruits. Examples thereof include, but are not limited to, cucurbitaceous plants such as cucumbers, bitter gourd, zucchini, melons, and watermelons and solanaceous plants such as tomatoes, eggplants, green peppers, and paprikas.

The term "hydroponic system" used herein refers to a non-soil culture system for conducting culture of a fruit vegetable by bringing roots of the fruit vegetable into contact with a nutrient solution containing nutrients necessary for plants for supplementation of the nutrients. The term may refer to a system including: a cultivation bed for culturing a fruit vegetable, a tank for storing a nutrient solution, a nutrient solution circulation tube that connects the cultivation bed and the tank, and control means for appropriate culture. In view of production cost or the like, the hydroponic system of the present invention is preferably used as, but is not limited to, a greenhouse.

### [Cultivation bed]

The configuration of the cultivation bed of the present invention is explained with reference to the drawings. As illustrated in Figure 1A, the cultivation bed includes a cultivation bed body (1), a water-retaining sheet (2) that covers the inner surface of the cultivation bed, a water-permeable root barrier sheet (root-cutting sheet) (3) that is laid over the water-retaining sheet (2), a holding portion (4) that holds a seedling of a fruit vegetable, and a drainage groove (5).

The material of the cultivation bed body (1) may be any material that is usually used in the art, and can be expanded polystylene or the like. In order to enable temperature control with reduced cost, it is preferable to use materials with the property of heat insulation.

The water-retaining sheet (2) is laid over the inner surface of the cultivation bed body (1). This is used for preventing leakage of a nutrient solutions from inside the cultivation bed. It is essential particularly in the case where the cultivation bed body (1) is constructed by connecting a plurality of units. The material of the water-retaining sheet (2) may be any material that is durable (thickness: not less than 0.07 mm), has a cold insulation function and a heat retention function, does not chemically react with a nutrient solution, and is not liquid-permeable. Examples thereof include, but are not particularly limited to, films made of synthetic resins such as polyethylene, polypropylene, polyvinyl chloride, polyester, and polyvinyl alcohol.

According to experiments conducted by the present inventors, it was revealed that in the configuration in which a nutrient solution is allowed to flow over the water-retaining sheet (2), grown plant roots block the water flow on the water-retaining sheet (2), which causes the nutrient solution to overflow from the top face of the cultivation bed or prevents the nutrient solution from properly flowing to the downstream of the cultivation bed. For such reason, the water-permeable root barrier sheet (3) is laid over the top face of the water-retaining sheet (2) for the cultivation bed of the present invention. The water-permeable root barrier sheet (3) is a sheet that allows liquid to permeate therethrough while preventing roots from penetrating therethrough, which is sometimes referred to as a "root-cutting sheet." The water-permeable root barrier sheet (3) is defined as not chemically reacting with a nutrient solution, not being eluted into a nutrient solution, being liquid-permeable, and having pores with sizes that prevent plant roots from passing therethrough. For example, the pore size is approximately 500 µm or less and preferably 300 µm or less or in a range of, for example, approximately 100 to 500 µm. The material of the water-permeable root barrier sheet (3) that can be preferably used is, but is not limited to, a material that is porous, and has breathable, filterable, and heat retaining properties. Examples of such material used include fabrics made of natural fibers of durable cotton, wool, hemp, or pulp, recycled fibers or synthetic fibers of rayon, nylon, polyester, polypropylene, or vinylon, and paper, which may be either woven or nonwoven fabrics. One example of the water-permeable root barrier sheet (3) preferably used in the present invention is, but is not particularly limited to, polyester taffeta manufactured by Maedakosen Co., Ltd.

Further, in the case where the water-permeable root barrier sheet (3) has water-absorbing and water-retaining properties, it can assist the contact between a nutrient solution and roots of a fruit vegetable.

The cultivation bed of the present invention has at least one holding portion (4) that holds a seedling (11) of a fruit vegetable. It is preferable to form drainage holes (6) on the holding portion (4). As illustrated in Figure 1B, a fruit vegetable, which is in the form of a cell seedling (11) in a solid medium or in a container such as a pot, is directly disposed on the holding portion (4). The size or shape of the cell seedling (11) is not particularly limited, and may be set as one seedling per cell so as to obtain 50 to 72 cell plug seedlings. The solid medium may be one that is usually used. Soil, rock wool, or the like can be preferably used as the solid medium. It is preferable to provide the holding portion (4) at a height at which the holding portion is always not in contact with a nutrient solution, which is for example, a height of 4 to 6 cm.

The cultivation bed of the present invention further includes a drainage groove (5) in the longitudinal direction thereof. The drainage groove (5) is covered with the above-mentioned water-retaining sheet (2). In view of this, in order for a nutrient solution to smoothly flow back to a tank from a cultivation bed, it is preferable that a space can be formed under the water-permeable root barrier sheet (3). For example, the holding portion (4) may be provided as a member separated from the cultivation bed body (1) on the water-retaining sheet (2), and the water-permeable root barrier sheet (3) may be provided on the holding portion (4).

In addition, it is preferable to form the drainage groove (5) below the holding portion (4) in order to appropriately supply a nutrient solution to a fruit vegetable, even in the case where roots (12) of a fruit vegetable do not extend from a seedling thereof or do not fully extend in a cultivation bed (Figure 1B) or the case where the amount of a nutrient solution flowing over a cultication bed is small. In such case, by bringing the water-permeable root barrier sheet (3) with water-absorbability and water-retaining ability into contact with a nutrient solution in the drainage groove (5), it is possible to allow the nutrient solution to permeate through the water-permeable root barrier sheet (3) made of non-woven fabric or the like via capillary action, thereby supplying the nutrient solution to the roots (12) of a fruit vegetable.

In hydroponic, when roots of a fruit vegetable continue to be always immersed in a nutrient solution, roots may be rotten due to lack of oxygen even in the presence of oxygen in the nutrient solution. Therefore, it is necessary to allow the nutrient solution to continuously flow and it is appropriate to supply the nutrient solution in a minimum necessary amount. Accordingly, the excess amount of the nutrient solution needs to flow into the drainage groove (5). Note that an appropriate depth of a nutrient solution flowing in a cultivation bed is, for example, 1.5 cm or less, although it may vary depending on the type or growing stage of a fruit vegetable.

In the early culture stage, roots are short and do not come out from a seedling (medium). As described above, the contact with liquid can be ensured via capillary action with the use of the water-permeable root barrier sheet (3) made of non-woven fabric or the like. However, for further sufficient hydration, the cultivation bed of the present invention can be provided with a water-absorbing mat (7) as well as the water-permeable root barrier sheet (3), in order to facilitate water supply in the early stage. The water-absorbing mat may be, for example, a strip-shaped mat, which has an edge portion in contact with the drainage groove (5) through which a nutrient solution always flows and another edge portion brought into contact with a cell seedling (11). As an example of such water-absorbing mat (7), a woven or non-woven fabric mat made from natural fibers, synthetic fibers or recycled fibers such as cotton, rayon, polyester, or the like, which has a thickness of approximately 3 mm and a width of approximately 45 to 50 mm and is highly water-absorbable, can be used.

Further, in the configuration of the cultivation bed body, there is a space for accommodating grown roots along both sides of the drainage groove (5) (right and left sides in the cross-sectional view) and further form a nutrient solution flowing groove (8) in either edge portion. As described below, ribs (9) may be formed on the inner bottom face (support face) disposed under the space of the cultivation bed body (1). It is also possible to provide a cultivation bed placement groove (10) at the bottom portion of the cultivation bed body (1), if necessary. In addition, the holding portion (4) is preferably provided with drainage holes (6).

Although the cultivation bed is not particularly limited, it is preferably a cultivation bed that allows cultures of fruit vegetable seedlings arranged in a single row and has a vertically long shape with a maximum length of 25 m, in order to enable culturing a plurality of stocks at the same time and achieve a structure suitable for efficient nutriculture. In such case, in reality, it is assumed that, for example, cultivation bed units of approximately 1 m in length joined to each other are disposed. The holding portion (4) that holds a seedling of a fruit vegetable is disposed at the center or either edge portion of the cultivation bed. In order to facilitate operations such as installation of a support post, branch trimming, training, harvesting, and the like, it is preferable that the holding portions are arranged in a single row. Alternatively, they may be arranged in two or more rows. The width of the cultivation bed is preferably in a range of 40 cm to 50 cm.

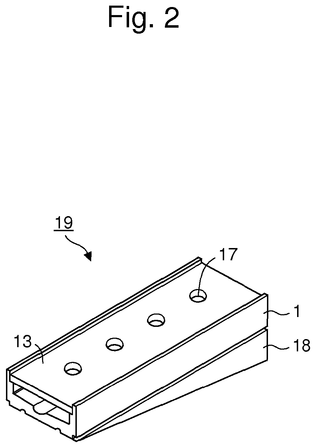

As illustrated in Figures 1 and 2, the cultivation bed (19) of the present invention may also be provided with a settled planting panel (13) that covers the upper portion of the cultivation bed body (1). The settled planting panel (13) functions to prevent roots usually existing in the ground from being exposed to sunlight and prevent evaporation of the nutrient solution. The settled planting panel (13) can be detachably mounted on the cultivation bed (19), and an opening (17) is formed at a position corresponding to each holding portion (4) that holds a seedling (11) so as not to inhibit the growth of the ground part of the seedling (11).

As illustrated in Figure 1B, roots (12) do not extend in the early growing stage of a fruit vegetable, and the settled planting panel (13) is stably disposed on the settled planting panel placement portion (16). However, after the medium growing stage, roots (15) extend to form a mat-like shape. In some cases, the settled planting panel (13) is pushed up due to the increase of rhizosphere, which may cause the panel to be displaced or fall off from the cultivation bed body (1). Accordingly, it is preferable to set the height (h) of the inner wall of the settled planting panel placement portion (16) to at least approximately 1.5 times the thickness of the settled planting panel (13).

Further, by sprinkling water with an irrigation tube (14) that have holes at 5- to 10-cm intervals, provided to the cultivation bed body (1) along the longitudinal direction thereof, it is possible to increase the amount of dissolved oxygen in the rhizosphere and promote root taking of seedlings in the early growth stage.

As illustrated in Figure 2, the cultivation bed (19) of the present invention is also characterized in that it has a longitudinal incline that allows a nutrient solution to circulate. Preferably, this incline is moderate and has a 1/100 to 1/200 (0.5% to 1%) gradient with respect to the horizontal plane. That is, for example, a gradient of approximately 5 to 10 cm per 10 m. The gradient may be designed such that the cultivation bed body (1) itself has a gradient. Alternatively, it is possible to allow a substrate (18), on which the cultivation bed body (1) is disposed, to have a gradient and place the cultivation bed body (1) thereon, thereby making an incline.

In the case where the cultivation bed of the present invention has a configuration in which a holding portion (4) for holding a seedling (11) of a fruit vegetable and a drainage groove (5) are disposed around the center of the lateral direction of a cultivation bed, a second incline that descends toward the center from both ends in the lateral direction can be provided on the inner bottom face (support face) of the cultivation bed body (1), if necessary (Figures 1A to 1C). Alternatively, in the case of a configuration in which the holding portion (4) and the drainage groove (5) are disposed at either edge portion in the lateral direction of the cultivation bed, the second incline may be provided such that the support face descends toward either edge portion. Preferably, the second incline has a 2- to 3-degree gradient.

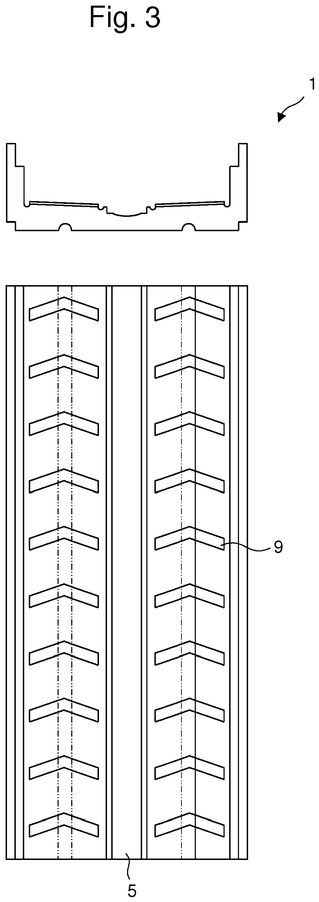

As illustrated in Figure 3, ribs (9), which make a face with uneven second incline can be provided to the cultivation bed (19) of the present invention, if necessary. Ribs (9) are formed such that when grown roots (15) are multi-layered in water in the cultivation bed (19), the support face with the incline is made uneven so as to increase the surface area of the support face in contact with the roots (15), thereby making it possible to increase roots in a moistened atmosphere.

Preferably, the ribs (9) are formed so as to be integrated into the cultivation bed body (1) and a water-retaining sheet (2) is laid thereon. Alternatively, the ribs (9) may be provided using a member different from one used for the cultivation bed body (1).

### [Hydroponic system]

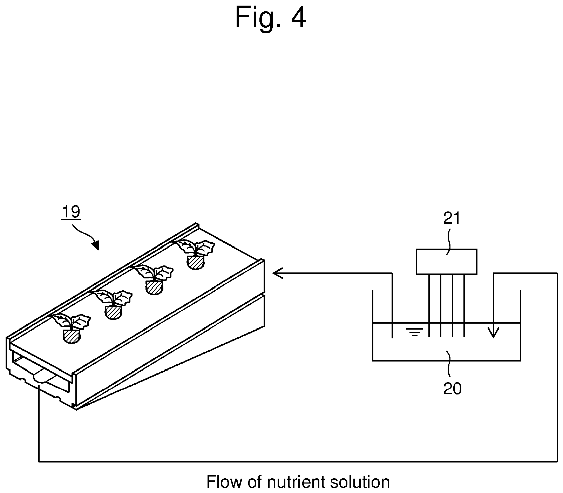

Figure 4 illustrates a schematic view of the system of the present invention. The system of the present invention is a hydroponic system, which has the cultivation bed (19) in the above-mentioned configuration and a nutrient solution tank (20), and is configured such that a nutrient solution circulates through the nutrient solution tank (20) and the cultivation bed (19), and which is provided with a system control unit (21) of the nutrient solution tank (20).

According to the present invention, the size of the nutrient solution tank (20) is not particularly limited. For example, the tank is preferably a tank capable of storing 1,000 to 1,500 L of a nutrient solution. According to the present invention, the nutrient solution tank (20) is provided with the following system control unit (21).

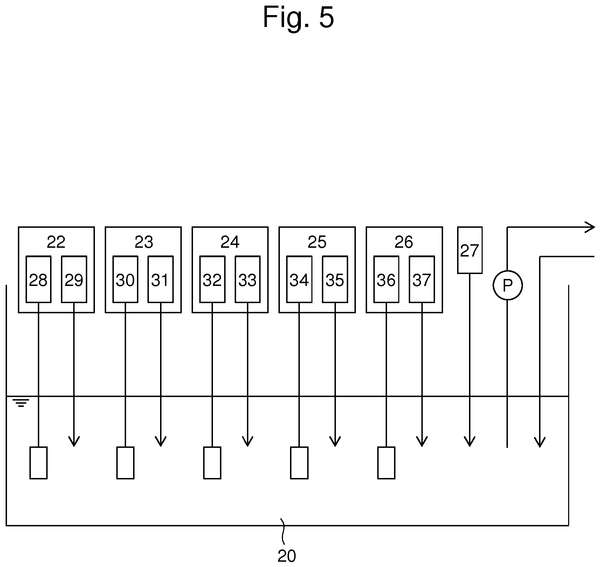

A system control unit (21) to be provided to the nutrient solution tank (20) is described in detail with reference to Figure 5. Controlling the temperature, pH, and oxygen concentration of a nutrient solution and electric conductivity (EC) that reflects the ion concentration in the solution in a hydroponic system has been proposed. However, the present inventors found that depletion of nitrate nitrogen in a nutrient solution occurs in the growth stage of a fruit vegetable, which causes significant deterioration of growth. The present inventors succeeded in promoting the growth by detecting a decrease in the concentration of nitrate nitrogen before depletion and adding nitrate nitrogen appropriately. Therefore, according to the present invention, providing means for detecting the nitrate nitrogen concentration, specifically the nitrate ion concentration, separately from electric conductivity (EC) and appropriately controlling the concentration is proposed.

Accordingly, the hydroponic system of the present invention is characterized in that it is provided with a system control unit (21) which has means for controlling electric conductivity (EC) of a nutrient solution (22), means for controlling nitrate nitrogen in a nutrient solution (23), means for controlling pH in a nutrient solution (24), means for controlling the dissolved oxygen concentration in a nutrient solution (25), and means for controlling the temperature of a nutrient solution (26). Moreover, the hydroponic system of the present invention can include sterilization means (27). Preferably, the sterilization means conducts sterilization with ozone or ultraviolet ray (UV).

Comprehensive management of the concentrations of nutrients in a nutrient solution is carried out by means for controlling electric conductivity (EC) (22) involving EC measurement by an electric conductivity (EC) sensor (28) and supplementation of nutrients based on measured values (29). The means can be designed to automatically supply nutrients into a nutrient solution based on the measured values.

Means for controlling nitrate nitrogen involves measurement of nitrate ions by a nitrate ion sensor (30) and supplementation of nitrate ions (i.e., nitrate nitrogen) based on measured values (31). The means can be designed to automatically supply nitrate ions into a nutrient solution based on the measured values.

Means for controlling pH involves, for example, pH measurement by a pH sensor (32) and supplementation of acid or alkali based on measured values (33). The means can be designed to automatically control pH of a nutrient solution based on the measured values.

Means for controlling the dissolved oxygen concentration involves, for example, measurement of the dissolved oxygen concentration by a dissolved oxygen sensor (34) and supplementation of oxygen based on measured values (35). The means can be designed to automatically supply oxygen into a nutrient solution based on the measured values. If oxygen is rapidly supplied or supplied in an excess amount, precipitates might be formed in the solution. It is therefore appropriate to use an air pump or the like used for fish farming for supplementation of oxygen (35).

The appropriate temperature of a nutrient solution is, for example, approximately 18°C to 22°C. The temperature of a nutrient solution in the nutrient solution tank (20) is measured using a temperature sensor (36) such as a thermometer and the nutrient solution in the tank may be warmed or cooled depending on the difference between the preset value and the measured value. It is possible to control vegetative growth and generative growth so as to ensure a stable yield by controlling the nutrient solution temperature (37).

In Figure 5, each control means is separately illustrated. Meanwhile, it is also possible to design a controller for overall management of these control means.

In addition, means for controlling a culture environment, which is used for conventional greenhouse culture or nutriculture, can be appropriately applied to the hydroponic system of the present invention.

### [Culture method]

Further, according to the present invention, a method for culturing a fruit vegetable, characterized by using the cultivation bed or the hydroponic system described above, is provided.

In the method of the present invention, the flow volume of a nutrient solution can be adjusted by controlling the flow value of the nutrient solution supplied from the nutrient solution tank (20) to the cultivation bed (19) by a pump or the like. Since the cultivation bed (19) of the present invention has an incline, the flow of the nutrient solution in the cultivation bed (19) is generated along the gradient of the incline. For appropriate culture of fruit vegetables, the flow rate of the nutrient solution is preferably 7 to 10 L/minute.

The present inventors succeeded in achieving an approximate yield of 40 to 60 tons per 1000 m² in the case of, for example, cucumber, using the method of the present invention. The yield corresponds to about three times the yield obtained by conventional open-field culture and nutriculture.

After harvesting fruit vegetables, plants in the cultivation bed can be collected, and the cultivation bed (19) can be disinfected as a whole for the next culture. At such time, the water-absorbing mat (7) can be changed with a new one. Therefore, according to the method of the present invention, it is possible to obtain a stable high production volume at a low risk of occurrence of diseases regardless of seasons under appropriate management.

However, in the circulation system of nutriculture, the number of microorganisms is smaller than that in soil culture because of the use of artificial media and disinfection after culture. Therefore, once pathogens invade into the circulation system, it results in rapid spread of diseases, and economical loss associated therewith is enormous. The present inventors have found that, by supplying photosynthetic bacteria and mycorrhizal fungi into a nutrient solution, the occurrence of diseases can be reduced and organic acids eluted from roots or generated by rotten roots can be decomposed to promote the growth of the rhizosphere and increase a crop yield, due to antagonism against possible pathogenic bacteria such as bacteria of the genus *Pythium.* The addition of these bacteria is also effective for inhibiting the growth of *E. coli* so as to prevent food poisoning.

Examples of photosynthetic bacteria include green sulfur bacteria, purple sulfur bacteria, purple nonsulfur bacteria, gliding filamentous green sulfur bacteria, and bacteria of the genus *Rhodobacter* such as *Rhodobacter capsulatus.* Mycorrhizal fungi are classified into filamentous fungi, ectomycorrhizal fungi, endomycorrhizal fungi, and arbuscular mycorrhizal fungi. Ectomycorrhizal fungi of arbuscular mycorrhizal fungi belonging to the genus *Bacillus* have an action of inhibiting the growth of pathogenic bacteria such as bacteria of the genus *Pythium* and the genus *Fusarium.*

Photosynthetic bacteria that are anaerobic bacteria can be effective when coexisting with aerobic bacteria. Examples of aerobic bacteria that can be used include bacteria of the genus *Bacillus* of the family *Bacillaceae,* the genus *Clostridium* of the family *Clostridiaceae,* and the genus *Thermaerobacter.*

### Examples

Cucumber varieties supplied from Japanese domestic nursery companies were cultured using the cultivation bed of the present invention, and harvested in accordance with market standards. Seeds were sown in the middle of January, settled planting was carried out at the beginning of February (Day 21 after sowing), and harvesting was started in the middle of March. The temperature of the nursery room was set to 28°C/18°C, and germination was induced at 28°C.

Culture was conducted under the conditions listed in Table 1.

**[Table 1]**

| | Preset value | Unit | Remarks |
|---|---|---|---|
| 1) Controlled culture solution temperature | 20 | °C | Temperature control by chiller |
| 2) Culture solution temperature | | | The culture solution composition was referred to |
| 3) pH | 6.5 | | pH was automatically adjusted with sulfuric acid |
| 4) Electric conductivity (EC) | 2.4 | mS/cm | Automatic fertigation was conducted when EC was blow the preset value |
| 5) Dissolved oxygen (DO) | 7.5 | mg/L | Dissolved oxygen concentration of circulating-back culture solution |
| 6) Photosynthetic bacterium | | | Bacteria in an amount of 400 ml was added every 10 days |
| 7) Greenhouse temperature setting (ventilation) | 28 | °C | 6:30-19:00 |
| | 15 | °C | 19:00 - 6:30 |
| 8) Thermal curtain | 15 | °C | 19:00 - 6:30 when the outside temperature is not more than 12°C |
| 9) Warmer control (4-stage thermostat) | 20 | °C | 6:30-9:30 |
| | 15 | °C | 9:30 - 16:00 |
| | 15 | °C | 16:00 - 20:00 |
| | 12 | °C | 20:00 - 6:30 |
| 10) Planting density | 1320 stocks/10 a | | Stock distance (0.5 m) × Furrow distance (1.5 M) |

Tables 2 and 3 show the compositions of the nutrient solutions used herein.

**[Table 2]**

| | H₂PO₄⁻ | NO₃⁻ | SO₄²⁻ | Na⁺ | NH₄⁻ | K⁺ | Mg²⁺ | Ca²⁺ |
|---|---|---|---|---|---|---|---|---|
| Early stage of culture | 9.00 | 13.00 | 2.50 | 1.00 | 1.50 | 6.00 | 3.00 | 6.00 |
| Middle stage of culture | 9.00 | 15.00 | 2.50 | 1.00 | 3.00 | 6.00 | 3.00 | 6.00 |
| Late stage of culture | 9.00 | 18.00 | 2.50 | 1.00 | 3.00 | 9.00 | 3.00 | 10.00 |

| | | | | | | | | |
|---|---|---|---|---|---|---|---|---|
| (unit: me/L) | | | | | | | | |

**[Table 3]**

| | Fe | B | Mn | Zn | Cu | Mo |
|---|---|---|---|---|---|---|
| Early stage of culture | 3.5 | 0.23 | 0.34 | 0.13 | 0.04 | 0.06 |
| Middle stage of culture | 3.5 | 0.23 | 0.34 | 0.13 | 0.04 | 0.06 |
| Late stage of culture | 3.5 | 0.23 | 0.34 | 0.13 | 0.04 | 0.06 |

| | | | | | | |
|---|---|---|---|---|---|---|
| (unit: ppm) | | | | | | |

As shown in Tables 2 and 3, the compositions of the nutrient solutions used in the early, medium, and late stages of culture are substantially identical. Nevertheless, since a tendency of nitrate nitrogen (NO₃⁻) to deplete was observed along with the progress in growth, the nitrate nitrogen concentrations in nutrient solutions used in the medium and late stages of culture were set to relatively high levels.

As a result of culture under the above conditions, an obvious yield increase was obtained. Although variations were observed depending on the varieties, in the case of, for example, Freedom House No. 3, the average number of fruits exceeded 200 per stock, and the approximate yield calculated based on a planting density of 1320 stocks/10 a (1000 m²) reached approximately 30 t/10 a by the end of June. It was revealed that an estimated yield on an annual basis could reach approximately three times the yield in the case of conventional methods.

### Industrial Applicability

With the use of the hydroponic system of the present invention, it is possible to reduce the labor and cost required for culture and stably harvest fruit vegetables two to three times a year at high yields.

### Reference Signs List

- 1: Cultivation bed body
- 2: Water-retaining sheet
- 3: Water-permeable root barrier sheet
- 4: Holding portion
- 5: Drainage groove
- 7: Water-absorbing mat
- 9: Rib
- 11: Seedling
- 13: Settled planting panel
- 14: Irrigation tube
- 16: Settled planting panel placement portion
- 18: Substrate
- 19: Cultivation bed
- 20: Nutrient solution tank
- 21: System control unit
- 22: Means for controlling electric conductivity (EC)
- 23: Means for controlling nitrate nitrogen
- 24: Means for controlling pH
- 25: Means for controlling dissolved oxygen concentration
- 26: Means for controlling temperature
- 27: Sterilization means

## Claims

1. A cultivation bed (19) for use in a hydroponic system for fruit vegetables, which includes: a cultivation bed body (1) having an incline in the longitudinal direction thereof; a water-retaining sheet (2) that covers the inner surface of the cultivation bed; a holding portion (4) for holding a seedling (11) of a fruit vegetable; a drainage groove (5), and a space for accommodating grown roots along both sides of the drainage groove (5), **characterised in that** the cultivation bed further provides a water-permeable root barrier sheet (3) that is laid over the water-retaining sheet (2); and a nutrient solution flowing groove (8) in either edge portion.

2. The cultivation bed (19) according to claim 1, wherein the incline has a 0.5% to 1% gradient.

3. The cultivation bed (19) according to claim 1 or 2, which further includes a water-absorbing mat (7) for facilitating hydration of the seedling (11) in the early stage of settled planting.

4. The cultivation bed (19) according to any one of claims 1 to 3, wherein the holding portion (4) for holding the seedling (11) of a fruit vegetable is positioned at an approximate center of the cultivation bed (19) in the lateral direction thereof, and wherein the cultivation bed body (1) has a second incline that descends toward the center from both sides along the lateral direction.

5. The cultivation bed (19) according to any one of claims 1 to 4, which includes an irrigation tube (14) having holes formed thereon at 5- to 10-cm intervals.

6. The cultivation bed (19) according to any one of claims 1 to 5, wherein the height of a settled planting panel placement portion (16) is not less than 1.5 times the thickness of the settled planting panel (13).

7. The cultivation bed (19) according to claim 4, which has ribs (9) for making a surface having the second incline uneven.

8. A hydroponic system, which is configured such that the hydroponic system includes the cultivation bed (19) according to any one of claims 1 to 7 and a nutrient solution tank (20) and that a nutrient solution circulates through the nutrient solution tank (20) and the cultivation bed (19), wherein the nutrient solution tank (20) is equipped with a system control unit (21).

9. The system according to claim 8, wherein the system control unit (21) includes: means for controlling electric conductivity (EC) of a nutrient solution (22); means for controlling nitrate nitrogen in a nutrient solution (23); means for controlling pH in a nutrient solution (24); means for controlling the dissolved oxygen concentration in a nutrient solution (25); means for controlling the temperature of a nutrient solution (26); and a sterilization means (27).

10. A method for culturing a fruit vegetable, which comprises using the cultivation bed (19) according to any one of claims 1 to 7 or the hydroponic system according to claim 8 or 9.

11. The method according to claim 10, wherein the fruit vegetable is a cucurbitaceous or solanaceous plant.

12. The method according to claim 10 or 11, which comprises supplying a photosynthetic bacterium and a mycorrhizal fungus into the nutrient solution.

## Patentansprüche

1. Anzuchtbeet (19) zur Verwendung in einem Hydrokultursystem für Fruchtgemüse, wobei das Anzuchtbeet Folgendes umfasst: einen Anzuchtbeetkörper (1), der eine Schräge in Längsrichtung aufweist; eine Wasserrückhaltefolie (2), die die innere Oberfläche des Anzuchtbeets bedeckt; einen Halteabschnitt (4) zum Halten eines Setzlings (11) eines Fruchtgemüses; eine Ablaufrinne (5) und einen Raum zum Aufnehmen von gewachsenen Wurzeln längs beider Seiten der Ablaufrinne (5),
**dadurch gekennzeichnet, dass** das Anzuchtbeet ferner eine wasserdurchlässige Wurzelsperrfolie (3), die über der Wasserrückhaltefolie (2) liegt; und eine Nährstofflösung-Strömungsrinne (8) in beiden Kantenabschnitten bereitstellt.

2. Anzuchtbeet (19) nach Anspruch 1, wobei die Schräge eine Steigung von 0,5 % bis 1 % aufweist.

3. Anzuchtbeet (19) nach Anspruch 1 oder 2, das ferner ein wasserabsorbierendes Vlies (7) zum Erleichtern einer Hydratation des Setzlings (11) im frühen Stadium der eingesetzten Bepflanzung umfasst.

4. Anzuchtbeet (19) nach einem der Ansprüche 1 bis 3, wobei der Halteabschnitt (4) zum Halten des Setzlings (11) eines Fruchtgemüses näherungsweise bei der Mitte des Anzuchtbeets (19) in Breitenrichtung positioniert ist, und wobei der Anzuchtbeetkörper (1) eine zweite Schräge hat, die von beiden Seiten längs der Breitenrichtung zur Mitte hin abfällt.

5. Anzuchtbeet (19) nach einem der Ansprüche 1 bis 4, das einen Bewässerungsschlauch (14) umfasst, der Löcher hat, die in Abständen von 5 bis 10 cm ausgebildet sind.

6. Anzuchtbeet (19) nach einem der Ansprüche 1 bis 5, wobei die Höhe eines Abschnitts (16) zum Anordnen einer Platte für die eingesetzte Bepflanzung nicht weniger als das 1,5-fache der Dicke der Platte (13) für die eingesetzte Bepflanzung beträgt.

7. Anzuchtbeet (19) nach Anspruch 4, das Rippen (9) hat, um dafür zu sorgen, dass eine Oberfläche, die die zweite Schräge aufweist, uneben ist.

8. Hydrokultursystem, das so konfiguriert ist, dass das Hydrokultursystem das Anzuchtbeet (19) nach einem der Ansprüche 1 bis 7 und einen Nährstofflösungstank (20) umfasst, und dass eine Nährstofflösung durch den Nährstofflösungstank (20) und das Anzuchtbeet (19) zirkuliert, wobei der Nährstofflösungstank (20) mit einer Systemsteuereinheit (21) ausgestattet ist.

9. System nach Anspruch 8, wobei die Systemsteuereinheit (21) Folgendes umfasst: Mittel zum Steuern einer elektrischen Leitfähigkeit (EC) einer Nährstofflösung (22); Mittel zum Steuern von Nitrat-Stickstoff in einer Nährstofflösung (23); Mittel zum Steuern des pH-Werts in einer Nährstofflösung (24); Mittel zum Steuern der Konzentration von gelöstem Sauerstoff in einer Nährstofflösung (25); Mittel zum Steuern der Temperatur einer Nährstofflösung (26); und Mittel (27) zum Sterilisieren.

10. Verfahren zum Anbauen eines Fruchtgemüses, das die Verwendung des Anzuchtbeets (19) nach einem der Ansprüche 1 bis 7 oder des Hydrokultursystems nach Anspruch 8 oder 9 umfasst.

11. Verfahren nach Anspruch 10, wobei das Fruchtgemüse eine Kürbispflanze oder ein Nachtschattengewächs ist.

12. Verfahren nach Anspruch 10 oder 11, das das Zuführen eines photosynthetischen Bakteriums und eines Mykorrhizapilzes in die Nährstofflösung umfasst.

## Revendications

1. Lit de culture (19) destiné à être utilisé dans un système hydroponique pour des légumes à fruits, qui comprend : un corps de lit de culture (1) ayant une inclinaison dans sa direction longitudinale ; une feuille de rétention d'eau (2) qui couvre la surface intérieure du lit de culture ; une partie de maintien (4) pour maintenir un plant (11) d'un légume à fruit ; une rigole de drainage (5), et un espace pour recevoir des racines cultivées le long des deux côtés de la rigole de drainage (5),
**caractérisé en ce que** le lit de culture fournit en outre une feuille de protection contre les racines, perméable à l'eau (3) qui est posée sur la feuille de rétention d'eau (2) ;et une rigole d'écoulement de solution nutritive (8) dans chaque partie de bord.

2. Lit de culture (19) selon la revendication 1, l'inclinaison ayant une pente de 0,5 % à 1 %.

3. Lit de culture (19) selon la revendication 1 ou 2, qui comprend en outre un tapis d'absorption d'eau (7) pour faciliter l'hydratation du plant (11) au stade précoce de la plantation installée.

4. Lit de culture (19) selon l'une quelconque des revendications 1 à 3, la partie de maintien (4) pour maintenir le plant (11) d'un légume à fruit étant positionnée à un centre approximatif du lit de culture (19) dans la direction latérale de celui-ci, et le corps du lit de culture (1) ayant une seconde inclinaison qui descend vers le centre depuis les deux côtés le long de la direction latérale.

5. Lit de culture (19) selon l'une quelconque des revendications 1 à 4, qui comprend un tube d'irrigation (14) ayant des trous formés sur celui-ci à des intervalles de 5 à 10 cm.

6. Lit de culture (19) selon l'une quelconque des revendications 1 à 5, la hauteur d'une partie de placement de panneau de plantation installé (16) n'étant pas inférieure à 1,5 fois l'épaisseur du panneau de plantation installé (13).

7. Lit de culture (19) selon la revendication 4, qui a des nervures (9) pour rendre irrégulière une surface ayant la deuxième inclinaison.

8. Système hydroponique, qui est configuré de telle sorte que le système hydroponique comprend le lit de culture (19) selon l'une quelconque des revendications 1 à 7 et un réservoir de solution nutritive (20) et qu'une solution nutritive circule à travers le réservoir de solution nutritive (20) et le lit de culture (19), le réservoir de solution nutritive (20) étant équipé d'une unité de commande de système (21).

9. Système selon la revendication 8, l'unité de commande du système (21) comprenant : des moyens pour commander la conductivité électrique (EC) d'une solution nutritive (22) ; des moyens pour commander l'azote de nitrates dans une solution nutritive (23) ; des moyens pour commander le pH dans une solution nutritive (24) ; des moyens pour commander la concentration d'oxygène dissous dans une solution nutritive (25) ; des moyens pour commander la température d'une solution nutritive (26) ; et des moyens de stérilisation (27).

10. Procédé de culture d'un légume à fruit, qui comprend l'utilisation du lit de culture (19) selon l'une quelconque des revendications 1 à 7 ou du système hydroponique selon la revendication 8 ou 9.

11. Procédé selon la revendication 10, le légume à fruit étant une cucurbitacée ou une solanacée.

12. Procédé selon la revendication 10 ou 11, qui comprend l'apport d'une bactérie photosynthétique et d'un champignon mycorhizien dans la solution nutritive.
